# EUROPEAN PATENT APPLICATION

(11) **EP 3 413 393 A1**
(43) Date of publication of application: **12.12.2018**
(21) Application number: 17174658.9
(22) Date of filing: 07.06.2017
(51) Int. Cl.: H01M 10/654, H01M 10/6553, H01M 2/22, H01M 2/10, H01M 2/20, H01M 10/6554, H01M 10/052, H01M 10/647

(54) **ELECTRODE ASSEMBLY FOR A BATTERY MODULE**

(71) Applicant: Robert Bosch GmbH, 70442 Stuttgart (DE); Lithium Energy and Power GmbH & Co. KG, 70469 Stuttgart (DE)
(72) Inventor: Stimm, Frank, 71229 Leonberg (DE); Kohn, Peter, 70178 Stuttgart (DE); Xu, Xiaoliang, 70180 Stuttgart (DE); Kohlberger, Markus, 70174 Stuttgart (DE); Grauer, Benjamin, 70563 Stuttgart (DE); Lammert, Patrik, 70197 Stuttgart (DE); Budde-Meiwes, Heide, 71696 Moeglingen (DE)

(57) **Abstract**

The present invention relates to an electrode assembly, comprising a plurality of electrodes, wherein the plurality of electrodes is surrounded by an electrically insulating cover, wherein additionally to the plurality of electrodes, a cooling plate is provided for cooling or heating the plurality of electrodes, wherein the cooling plate at at least one end protrudes the electrodes to form a connecting portion, wherein the connecting portion proceeds in a direction deviating from the main direction of the electrodes for fixing the electrode assembly to a cooling base plate, wherein the cooling plate is positioned between at least two electrodes of the plurality of electrodes and is further surrounded by said electrically insulating cover.

## Description

The present invention relates to an electrode assembly for a battery module. The present invention further relates to a battery module comprising such an electrode assembly.

### State of the art

Electrochemical energy storing devices, such as lithium ion batteries, are known and used in wide application areas. Examples are stationary applications, such as wind energy systems, and further vehicles, such as hybrid vehicles or purely electrically driven vehicles. Further, such devices may be used in consumer electronics, such as for mobile phones or portable computers. Under the known batteries, Li-ion batteries are vital energy storage devices due to their high specific energy density.

An important factor for defining battery systems is the specific energy, which defines the amount of energy which may be stored per mass of battery, and which is measured in watt hours per kilogram (wh/kg).

Drive batteries for vehicles, for example, are often formed in a modular arrangement, wherein at least two battery cells are connected parallel or in series and thus form modules, which are also called sub units. Such sub units often share a common cooling means and are combined to form the final battery.

DE 10 2008 038 936 A1 describes a galvanic element which comprises a cell arrangement which is covered by a foil having a high temperature conductance.

The foil comprises a connection portion which goes beyond the electrode assembly for contacting the foils to a cooling plate.

US 2011/0262795 describes a battery having a housing for accompanying at least one electrolyte. The at least one electrolyte is accommodated by the housing. At least one thermal conduction element is arranged in the at least one battery in order to increase the thermal conductivity within the at least one battery.

US 2003/0165734 relates to an implementation for cooling and positioning prismatic battery cells. In one embodiment of that document, a cooling fin made of thermally conductive material is placed between prismatic battery cells. The cooling fin also acts as a structural component for the battery. The area of the cooling fin in contact with the cell is used to transfer the cell's heat to a second area of the cooling fin that is not in contact with the cell. The second area is in a fluid stream, such as air, water, oil, etc., that conducts the heat away. In one embodiment, the cooling fin is constrained with other fins where an alternating geometry is obtained. Then components are combined into a compressed unit.

US 2015/0180089 A1 describes a high-voltage battery for a vehicle. The high-voltage battery includes an electrode assembly that includes a cathode plate, an anode plate, and a separator disposed between the cathode plate and the anode plate. A safety member is coupled to an outer surface of the electrode assembly, and includes a first electrically conductive plate electrically connected to the cathode plate, and a second electrically conductive plate that is electrically connected to the anode plate and has an insulation surface on a surface of the safety member. The safety member thus encloses the electrode assembly.

JP 2001068156 A describes a polymer electrolyte battery which is assembled by sealing a stacked electrode group formed by stacking positive electrodes having a positive electrode mix layer formed on at least one side of a positive electrode current collector and negative electrode having a negative electrode mix layer formed on at least one side of a negative electrode current collector so as to interpose a polymer electrolyte layer between a set of electrodes into an outer case containing a metal foil. Short-circuiting and heat radiation accelerating units formed by arranging two metal plates each having a thickness of 30 µm or more through an insulator are installed on the outside of the outermost electrode on at least one side of the stacked electrode group, and the metal plate of the short-circuiting and heat radiation accelerating units is connected to a lead part of the electrode having different polarity.

### Disclosure of the invention

The present invention relates to an electrode assembly, comprising a plurality of electrodes, wherein the plurality of electrodes is surrounded by an electrically insulating cover, wherein additionally to the plurality of electrodes, a cooling plate is provided for cooling or heating the plurality of electrodes, wherein the cooling plate at at least one end protrudes the electrodes to form a connecting portion, wherein the connecting portion proceeds in a direction deviating from the main direction of the electrodes for fixing the electrode assembly to a cooling base plate, wherein the cooling plate is positioned between at least two electrodes of the plurality of electrodes and is further surrounded by said electrically insulating cover, for example fully embedded in said electrically insulating cover.

Such an electrode assembly may provide significant advantages over the prior art, in particular with regard to a cost-efficient and simplified arrangement and thus production process.

It is thus described an electrode assembly. Such an electrode assembly may generally comprise a plurality of electrodes which may be formed as known in the art. A plurality of electrodes shall thereby mean at least two electrodes. Further, the electrodes may comprise cathodes or anodes or cathodes and anodes. According to this, the electrode assembly in the case that electrodes of different polarities are provided may form a battery cell.

In detail, the plurality of electrodes may comprise a current collector which is provided with a layer of active material. The material of the current collector as well as of the active material may be chosen as it is generally known in the art. Regarding the non-limiting example of a lithium battery, a cathode may be formed from aluminum as current collector and with Lithium cobalt oxide as active material, whereas an anode may be formed by using copper as a current collector and graphite as active material, the materials as described before, however, being in no way limiting the electrode assembly as described.

The plurality of electrodes is surrounded by an electrically insulating cover, or, in other words, it is sealed by a cover and is thus embedded in said cover. Generally, the cover and its electrical resistance may be designed in order to fulfill the requirements according to the specific needs. For example, the cover may have an electrical resistance in a range of equal or more than 1.10⁵ Ω mm²/m, such as equal or more than 1.10⁹ Ω mm²/m, these values however are not meant to limit the present electrode assembly.

It is further provided that next to the plurality of electrodes, a cooling plate is provided and is located in the electrically insulating cover. The cooling plate may be formed as a metal sheet, for example, and may particularly have a high temperature conductance. For example, the cooling plate may be formed at least partly from copper as this material has a high thermal conductivity, such as nickel plated copper as this provides an improved corrosion resistance, or from aluminum, like will be described in more detail below. The cooling plate, such as formed from copper, may have a thickness in the range of equal or more than 50µm to equal or less than 1mm. According to the above, the cooling plate is sealed, such as hot sealed, on both sides with the cover such as a composite foil.

The cover such as the composite foil alone or additionally the cooling plate may be shaped such as in a bulbously form which may be advantageous in order to accommodate the electrodes. The specific arrangement, i.e. if only the cover is shaped or only the cooling plate or both the cooling plate and the cover is dependent on the requirements, such as how many electrodes of which polarities are required.

Further, it has to be understood that even though the respective element is called cooling plate, due to its properties especially of having a high thermal conductivity it may be used for cooling or for heating the electrodes.

The cooling plate is provided preferably fully inside the cover and is thus as well sealed by said cover, and is positioned such, that the cooling plate is positioned between at least two electrodes of the plurality of electrodes. In other words, the cooling plate is positioned adjacent at least two electrodes, in particular a plurality of electrodes, wherein electrodes are positioned at both sides of the cooling plate. It may be provided that on a first side of the cooling plate, one or more anodes are provided and that at the second side of the cooling plate, one or a plurality of cathodes is provided. However, it may also be the case that on both sides of the cooling plate, cathodes are provided as well as anodes. The presence of cathodes and anodes may particularly be chosen in dependence of the wiring or interconnection of the respective electrodes.

It is further provided that at least one end of the cooling plate protrudes the electrodes. This portion of the cooling plate which protrudes the electrodes is usable as connecting portion. The connecting portion may generally be connected to a cooling base plate which is formed for guiding away heat from the cooling plate. The connecting portion is further formed such that it proceeds in a direction deviating from the main direction of the electrodes and the cooling plate. In other words, the cooling plate, or its main body or main portion, respectively, proceeds in a direction between the electrodes, wherein the connecting portion proceeds in a direction, such as in one direction, deviating therefrom. It may be preferred that the connecting portion proceeds in a direction which encloses an angle to the main portion which may lie in a range of equal or more than 30° to equal or less than 150°, such as in a range of equal or more than 45° to equal or less than 135°, such as in a range of equal or more than 70° to equal or less than 110°, preferably in a range of equal or more than 85° to equal or less than 105°, most preferred at 90°.

When providing an electrode assembly as described before, a very advantageous mechanical and thermal connection of one or most preferred more than one electrode assemblies to a cooling base plate may be reached. This may be mainly due to the fact that as the connecting portion proceeds in a direction deviating from the direction of the main body of the cooling plate, the electrode assembly may proceed in a main direction which deviates from the main direction of the cooling base plate. For example, the electrode assembly may proceed in a main direction which deviates from the main direction of the cooling base plate in an angle of 90° or the further angles as described before. Therefore, a room saving arrangement of the electrode assemblies may be realized. With this regard, it may be provided that a plurality of electrode assemblies as described before are connected to a common cooling base plate.

Apart from that, the connecting portion may be formed having a comparably large surface, which in turn may allow a large contact of the connecting portion and the cooling base plate. This allows on the one hand a very secure fixation which in turn allows the formation of a very durable battery cell having a plurality of electrode assemblies. Apart from that, due to the large contact between the connecting portion and the cooling base plate, a very efficient heat transfer may be provided allowing a very efficient working behavior of the cooling plate. The latter may further be improved due to the fact that the cooling plate is located between at least two electrodes. This feature as well may result in a very efficient cooling behavior of the cooling plate.

Apart from the above due to the fact that the cover may be used for covering or sealing, respectively, both of the plurality of electrodes and the cooling plate, an additional cover for the cooling element is not required. Especially, no additional insulating layer with regard to the cooling base plate is required. This allows saving a further process step and further allows producing the electrode assembly cost-saving.

The latter may be further enhanced in case the cooling plate has edge regions with recesses. This allows a simplified arrangement of the cooling plate in a frame which may be provided for accommodating the electrode assembly. Regarding this, only small assembly space is required which may significantly enhance and simplify the production method of said electrode assembly. For example, a frame such as made from plastics may be fixed to a further frame by means of a hook, such as formed from plastic, without requiring additional assembly space as the hook may proceed through the recess. With this regard, the electrode assembly may be secured in the inner frame easily.

It may be preferred that the cover is formed as an electrically insulating foil. For example, the cover may be formed as a composite foil. Examples for such composite foils may comprise, for example a metal foil being laminated with a foil of polymer, such as copper or aluminum foil laminated with a polymer, such as a polyolefine, for example polypropylene, the before named examples being non-limiting. Such an embodiment may allow an especially simplified arrangement as a foil as a cover may be used for sealing and thus covering the electrodes as well as the cooling plate in an easy manner for example by means of hot sealing. Apart from that, for example by using a composite foil, a high mechanical stability may be reached together with the required insulation properties.

With this regard, the electrically insulating foil, or cover, respectively, may have insulation properties as required. As an example, the electrical conductivity may be chosen such, that no short circuit or no discharge is formed which deteriorates the working behavior of the electrode assembly when contacting the cover with an electrically conductive part. As exemplary values, an electrical specific resistance of electrically insulating materials as described herein may be chosen in an exemplary manner in the range of equal or more than 1.10⁵ Ω mm²/m, such as equal or more than 1.10⁹ Ω mm²/m.

It may further be preferred that the cooling plate is provided with an electrically insulating layer, such as a coating, and thus additionally to the electrical insulating cover as described before. As an example, a polymer film or a composite film, or composite foil, respectively, may be used with this regard. Examples for composite films again may comprise a laminate of a metal film, such as copper or aluminum, with a polymer film, such as an olefine, for example polypropylene. This embodiment may combine a large electrical resistance with a high stability and durability as it is ensured especially effectively that the danger of short circuits is reduced. Further, the layer may contribute in a very advantageous manner to fix a sealing cover to the cooling plate, such as by melt sealing.

For example, the electrically insulating layer may be provided between the cooling plate and a collector and may thus act as a security measure.

It may further be preferred that at least one electrode is electrically connected to the cooling plate. According to this embodiment, the cooling plate thus may serve for electrically contacting the electrode assembly, or at least one electrode thereof. According to this, a further contact element which may be sealed into the cover may be omitted which further simplifies the arrangement. Apart from that an interconnection of the electrodes, such as in parallel or in series, may be simplified. For example, in case a cathode is electrically connected to the cooling plate, an anode may be electrically contacted by means of a further electrical contact which proceeds from the outside of the cover to the inside of the cover and thus to the respective electrode, or vice versa.

It may further be preferred that the cooling plate comprises an electrically insulating layer, wherein the layer comprises a gap for electrically contacting the cooling plate and at least one electrode. This may allow an especially defined and secure contact of the electrode and the cooling plate and may further provide in an especially simple and effective manner to combine a contact of the at least one electrode and the cooling plate with the provision of an electrically insulation of the cooling plate and a sealing of the cooling plate by the cover.

It may further be preferred that the cooling plate is electrically insulated against the electrodes, and thus against all electrodes, wherein external connectors are guided into the cover for electrically contacting the electrodes. This embodiment may ensure a very defined electrical contact from the electrodes to the outside, wherein the electrical contact is insulated against its surrounding very effectively.

It may further be preferred that the cooling plate is formed as a multilayer assembly, wherein a first layer is provided for electrically connecting at least one electrode being polarized as an anode and wherein a second layer is provided for electrically connecting at least one electrode being polarized as a cathode. This embodiment allows an especially simplified arrangement in case both sides of the cooling plate are connected by different electrodes. With regard to the layer arrangement, the latter may form a two-layer arrangement, a three layer arrangement or comprise more than three layers, for example.

With regard to the layer being provided for connecting a cathode, the latter may comprise or consist of aluminum, for example having a thickness in the range of equal or more than 25µm to equal or less than 0,975 mm. Regarding the layer being provided for connecting an anode, the latter may be formed from copper, such as having a thickness in the range of equal or more than 1µm to equal or less than 5µm. Such an embodiment may form a two layer arrangement, for example, and may be used for interconnecting the batteries in series, for example. Thus, a serial interconnection may be realized via the cooling plate, wherein at the assembly of a battery module, a further electrical connection may be omitted. The electrodes not being connected to the cooling plate may be connected to a connector which is guided into the cover in a sealed manner as described before.

Optionally, the before described layer arrangement may comprise a further layer, which may be positioned to be an intermittent layer positioned between the layers as described before. The intermittent layer may comprise, or consist of, copper or steel, both exemplarily in a thickness of equal or more than 25µm to equal or less than 0,5 mm, in which case the first layer may be formed from nickel.

Further, it may be provided that an intermittent layer is provided which may be formed from an electrically insulating material such as polymer, for example a polyolefine, such as polypropylene or polyethylene. With this regard, the different polarized electrodes may be contacted independently form one another.

A further exemplary two layer arrangement of the cooling plate may be formed from aluminum as a first layer and a second layer may be formed from an electrically insulating material, such as an electrically insulating foil. The latter may be formed from, or consist of, a polyolefine, such as polypropylene or polyethylene. One type of electrodes may be connected directly to the cooling plate, whereas the further type of electrodes may be insulated against the cooling plate and may be connected may additional interconnections, for example as a parallel interconnection or a serial interconnection. This may be realized by providing an electrically insulative layer on the cooling plate as described before. It may further be preferred that the cooling plate is formed in a two-part form along at least one of its height and width, wherein one part is provided for being polarized as a cathode and a further part is provided for being polarized as an anode. This embodiment allows a further simplified arrangement as a current collector may be omitted in case the respective electrode is contacted to the respective part. The two parts may be fixed to each other directly, for example by welding, or by an electrically insulating part such as by the electrode assembly itself by usage of a laminate foil, or by a plastic part, advantageously being formed from polypropylene or polyethylene. Such plastic parts may be formed by means of injection molding, at which the metal parts are provided in a mold and plastic is injection molded thereto.

As generally known from electrodes the cathode part may be formed from aluminum and the anode part may be formed from copper, nickel plated copper, or Hilumin, or in other words from nickel plated steel.

It may further be preferred that the cooling plate comprises at least one hole for guiding an electrolyte through the cooling plate. This may be especially advantageous in case on a first side of the cooling plate, there is provided one or more anodes and on the opposite side of the cooling plate, there is provided one or more cathodes. This arrangement allows an especially simplified arrangement and furthermore an effective working behavior of the electrode arrangement, or battery cell, respectively.

With regard to further technical features and advantages of the electrode assembly as described above, it is referred to the description of the battery module, the figures and the description of the figures.

The present invention further relates to a battery module comprising at least one electrode assembly as described before and a cooling base plate, wherein the connecting portion of the at least one electrode assembly is connected to the cooling base plate.

It may be provided that one electrode assembly as described is attached to the cooling base plate or that a plurality of electrode assemblies is attached to the cooling base plate. The electrode assemblies may be electrically independent from one another or they may be interconnected, such as in series or in parallel.

Such a battery module may provide the advantages as described before. In particular, such a battery module may provide significant advantages over the prior art, in particular with regard to a cost-efficient and simplified arrangement and thus production process.

With regard to further technical features and advantages of the battery module as described above, it is referred to the description of the electrode assembly, the figures and the description of the figures.

### Figures

Further advantages and embodiments of the subject-matters as described herein are described in the figures and the following description of the figures, wherein the features described may be part of the invention alone or in any combination, insofar it is not excluded due to the description or the context. It has to be noted that the figures are of illustrative purpose, only, and are not meant to restrict the present subject-matters.
- Fig. 1: shows a schematical sectional view of an embodiment of an electrode assembly;
- Fig. 2: shows a schematical sectional view of a part of the electrode assembly according to figure 1;
- Fig. 3: shows a plurality of electrode assemblies being connected to a cooling base plate;
- Fig. 4: shows an embodiment of a cooling plate for an electrode assembly;
- Fig. 5: shows a further embodiment of a cooling plate for an electrode assembly;
- Fig. 6: shows a further embodiment of a cooling plate for an electrode assembly;
- Fig. 7: shows a further embodiment of a cooling plate for an electrode assembly with a cover;
- Fig. 8: shows a further embodiment of a cooling plate for an electrode assembly with attached electrodes;
- Fig. 9: shows a further embodiment of a cooling plate for an electrode assembly;
- Fig. 10: shows a further embodiment of a cooling plate for an electrode assembly;
- Fig. 11: shows a further embodiment of a cooling plate for an electrode assembly
- Fig. 12: shows a plurality of electrode assemblies being connected to a cooling base plate;
- Fig. 13: shows a detail of fig. 12;
- Fig. 14: shows an electrode assembly with electrical connectors for electrically connecting the electrodes;
- Fig. 15: shows a further embodiment of a cooling plate for an electrode assembly;
- Fig. 16: shows a schematical sectional view of a part of a further electrode assembly; and
- Fig. 17: shows a further embodiment of an electrode assembly
- Fig. 18: shows a further embodiment of an electrode assembly.

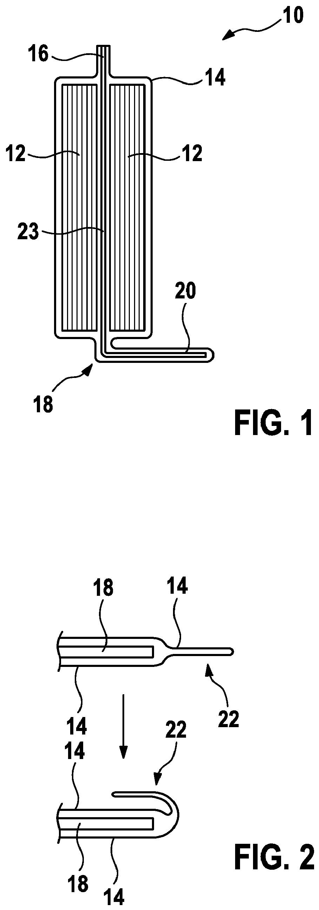

Figure 1 shows a sectional side view of an exemplary embodiment of an electrode assembly 10. The electrode assembly 10 comprises a plurality of electrodes 12, wherein the plurality of electrodes 12 is surrounded by a cover 14. Further to the electrodes 12, a cooling plate 16 is positioned in the cover 14 and thus the cooling plate 16 is surrounded by said cover 14. With this regard, the cooling plate 16 is positioned between at least two electrodes 12. For example, the cover 14 is a composite film which is sealed to the cooling plate 16.

It can further be seen that the cooling plate 16 protrudes the electrodes 12 at at least one end. The portion 18 of the cooling plate 16 protruding the electrodes 12 is formed as connecting portion 20 which proceeds in a direction deviating from the main direction of the electrodes 12 and thus of the cooling plate 16, or its main portion 23, respectively.

The connecting portion 20 may be fully sealed by the cover 14 such as by the composite foil as sealing foil. This may be realized by folding the cover, or sealing foil in order to get an overlapping portion 22. This is shown in figure 2. No separate insulation with regard to a cooling base plate is required which simplifies the construction significantly.

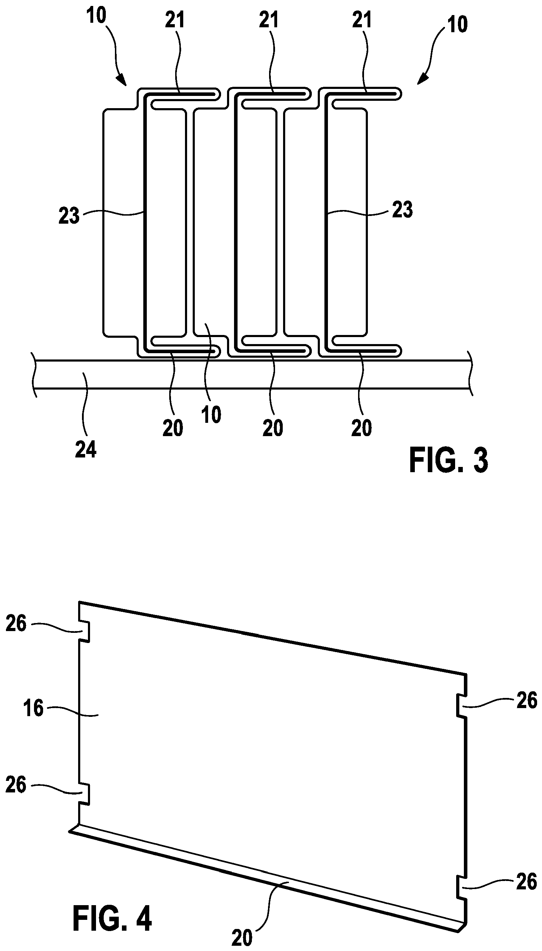

Fig. 3 shows a plurality of electrode assemblies 10 which are positioned in a stacked configuration. Such a configuration may provide a plurality of electrode assemblies 10 in a very small volume. It can further be seen that additionally to the connecting portion 20 as described and independently from the specific embodiment, the cooling plate 16 may have a second connecting portion 21. The electrode assemblies 10 may be connected to a cooling base plate 24, which further guides heat away from the electrode assemblies 10. Preferably, the electrode arrangement 10 is stabilized by polymer supports as module frame.

With this regard, Figure 4 shows an embodiment of the cooling plate 16 for an electrode assembly 10 at which the cooling plate 16 has edge regions with recesses 26. This allows a simplified arrangement of the cooling plate in the frame thereby requiring only small assembly space. For example, a frame such as made from plastics may be fixed to a further frame by means of a hook, such as formed from plastic, without requiring additional assembly space.

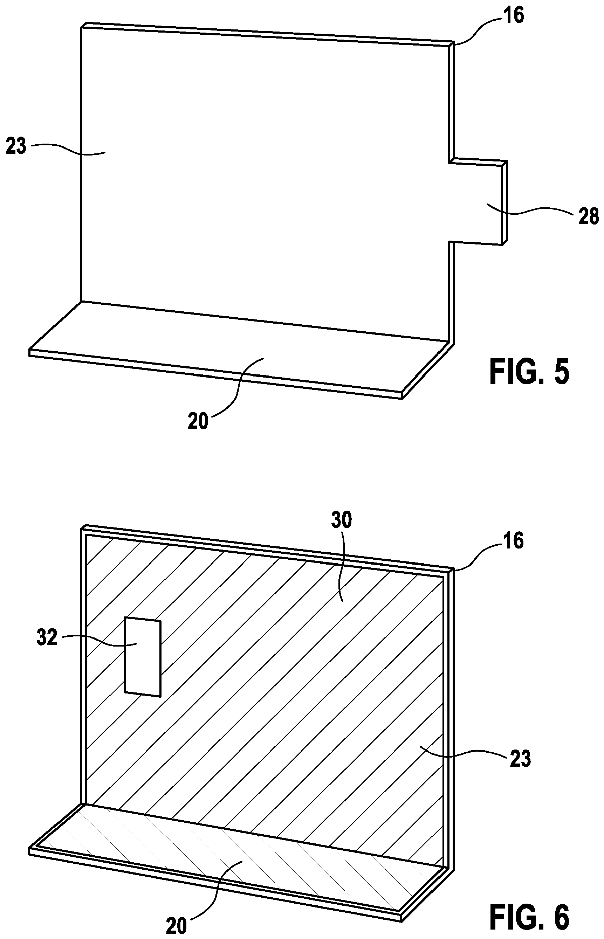

Figure 5 shows an exemplary embodiment of the cooling plate 16. It can be seen that the contact portion 20 and thus the portion 18 protruding the electrodes 12 is bent in an angle of 90° with regard to the main portion 23 of the cooling plate 16. Further, a contact portion 28 is shown which can be used for electrically connecting one or more electrodes 12 in case these are electrically connected to the cooling plate 16.The contact portion 28 may independently from the respective embodiment be formed as a projection, for example.

Figure 6 shows an embodiment in which the cooling plate 16 is covered by an electrical insulating layer 30. In order to realize an electrical contact with an electrode, a gap 32, or recess, respectively, is provided which may be used for contacting the electrodes 12. The electrical insulating layer 30 may be a polymeric foil, such as formed from a polyolefine, for example polypropylene polyethylene, whereas the cooling plate may be formed from aluminum, for example. For example, the foil, such as formed from polyethylene, may have a thickness in the range of equal or more than 30 µm to equal or less than 100 µm, such as 50 µm. The advantage of such an electrical insulator may inter alia be seen in the fact that the insulator may contribute in a very advantageous manner to fix a sealing cover to the cooling plate, such as by melt sealing. Of course, the insulator may be present at both opposite sides of the cooling plate 16.

For example, the cooling plate 16 may be provided on a roll, without a bent portion, and may be provided with a glue, such as a glue that may be hardened, for example an acrylate glue. At the portion of the gap 32, the glue may not be provided with an insulating layer, or the layer may be removed afterwards. Subsequently, the glue may be hardened and the cooling plate 16 may be bent to form the portion 18.

As a further example, the cooling plate 16 may be provided on a roll, without a bent portion, and may be provided with a release agent at the portion of the recess, such as paraffinic wax, after which the cooling plate is laminated with a two layer arrangement comprising ppa (polypropylene, polarly modified, such as grafted with maleic acid anhydride), the latter layer being arranged adjacent to the cooling plate and comprising polypropylene and is coextruded. The portion which is provided with a release agent, the co-extruded layer does not adhere to the cooling plate and the layer may thus be removed easily, such as by a laser or a punching tool, or stamping tool, respectively, which only cutes the foils. Thus, this layer may be released from an insulation and optionally cleaned and the cooling plate 16 may be bent to form the portion 18.

Alternatively, a foil which has a respective gap 32 may be used.

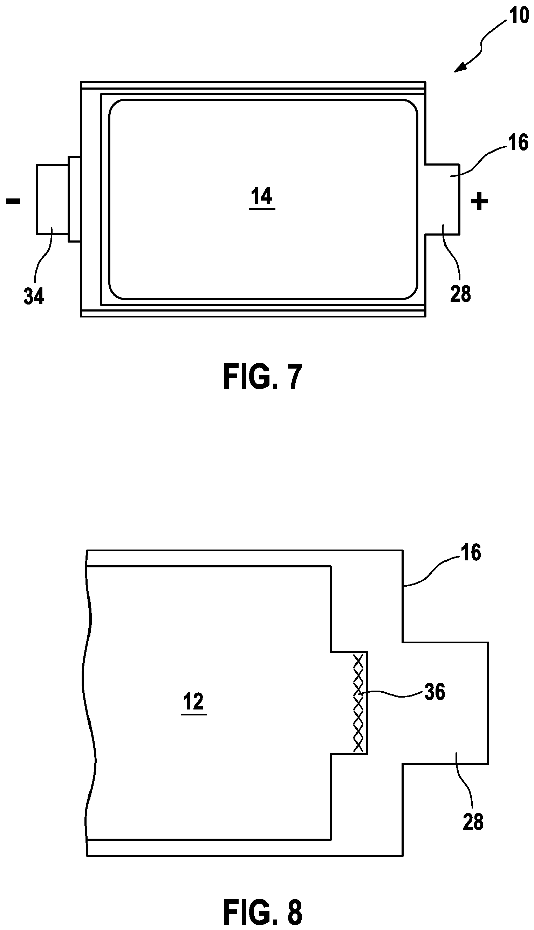

Figure 7 shows an arrangement of the electrode assembly 10. It can be seen that the cover 14, such as the composite film, fully seals the cooling plate 16, such as by heat sealing. For this regard, generally and independently of the specific embodiment, the composite foil of the cover 14 may have a foil which may be heat sealed with the cooling plate 16, or the cooling plate 16 may be provided with a coating or an intermittent layer, such as the insulating layer 30 according to figure 6, which may form a heat sealing connection. Foils which may be used for heat sealing may comprise polar modified polyolefines, such as polypropylene grafted with maleic acid anhydride, or ethylene vinyl acetate polymers.

For realizing an electrical connection to the electrodes, the contact portion 28 of the cooling plate 16 is provided which may for example have a positive polarity. For this regard, the cooling plate 16 is directly connected to at least one electrode 12. Regarding the negative electrode, a connector 34 may be sealed within the cover 14 and which may electrically connect at least one negative electrode and proceeds to the outside of the cover 14. Such voltage tap-off is known, for example, from pouch cases. The connector 34 may be formed from copper, for example, if it is used for the negative electrode. However, the before described embodiment may also be provided vice versa, so that the positive electrode is connected by a connector 34 and the negative electrode is contacted by the cooling plate 16, or the connecting portion 28, respectively.

Fig. 8 shows the connection of an electrode 12, or a plurality of electrodes 12, respectively, to the cooling plate 16 in order to realize an electric connection. In particular, the respective contact of the one or more electrodes 12 is connected to the cooling plate 16 by means of a welding process, such as ultrasonic welding, laser welding or resistance spot welding, by forming a welding portion 36.

Alternatively, the cooling plate 16 may be realized electrically insulating, for example by providing an electrically insulating layer 30 to the cooling plate 16 analogous to the composite foil of the cover 14, for example. Additionally, the contacts may be formed electrically insulated from the surrounding.

The electrode assemblies 10, or battery cells, respectively, may then be electrically connected in that the connecting portions 20 are bent for example in an angle of 90° and welded with the cooling base plate 24, for example in the configuration of figure 3.

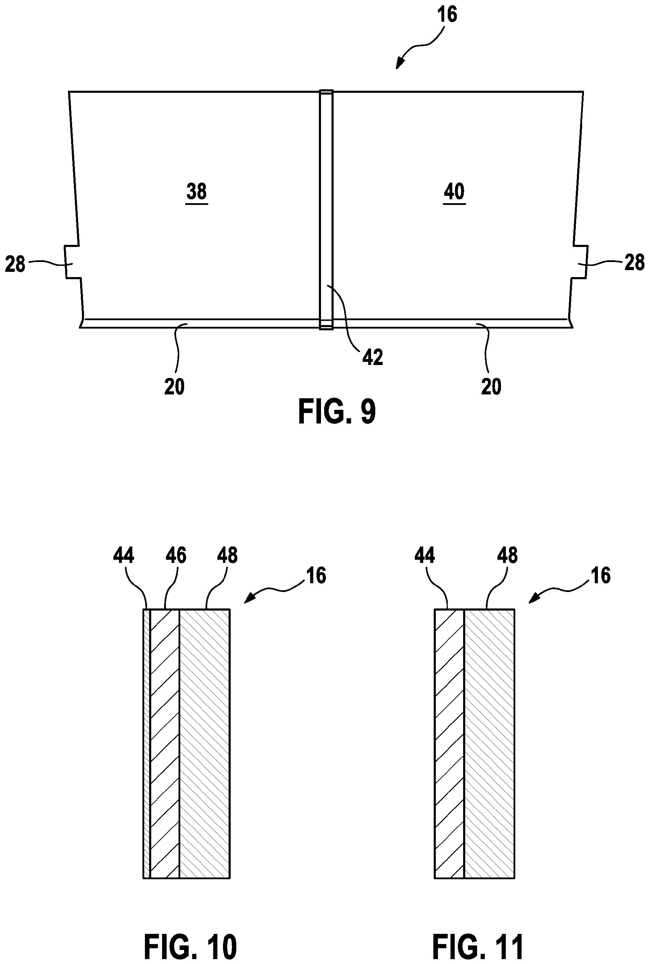

Figure 9 shows a further embodiment of a cooling plate 16 at which the cooling plate 16 is formed in a two-part form along its width, having a first part 38 and a second part 40 being connected by an electrically insulating connector 42 such as a plastic part being formed by means of injection molding. The first part 38 is polarized as cathode and the second part 40 is polarized as anode wherein respective electrodes 12 may be electrically connected thereto. Both parts 38, 40 each comprise respective connecting portions 28. The first part 38 may be formed from aluminum, wherein the second part 40 may be formed from Hilumin, copper or nickel plated copper.

Regarding figure 10, a three layer arrangement of the cooling plate 16 is shown. Such a layer arrangement may comprise a first layer 44 to be connected with an anode, such as formed from nickel, an intermittent layer 46, such as formed from copper or from steel, and a third layer 48 to be connected with a cathode, such as formed from aluminum. Even though the intermittent layer 46 may be omitted, in which case the first layer 44 is preferably a copper layer as shown in figure 11, it may be preferred to provide such an intermittent layer 46 in order to reduce the risk of oxidation of the first layer 16, or copper layer, respectively. The first layer 44 and the third layer 48 may be connected to respective electrodes.

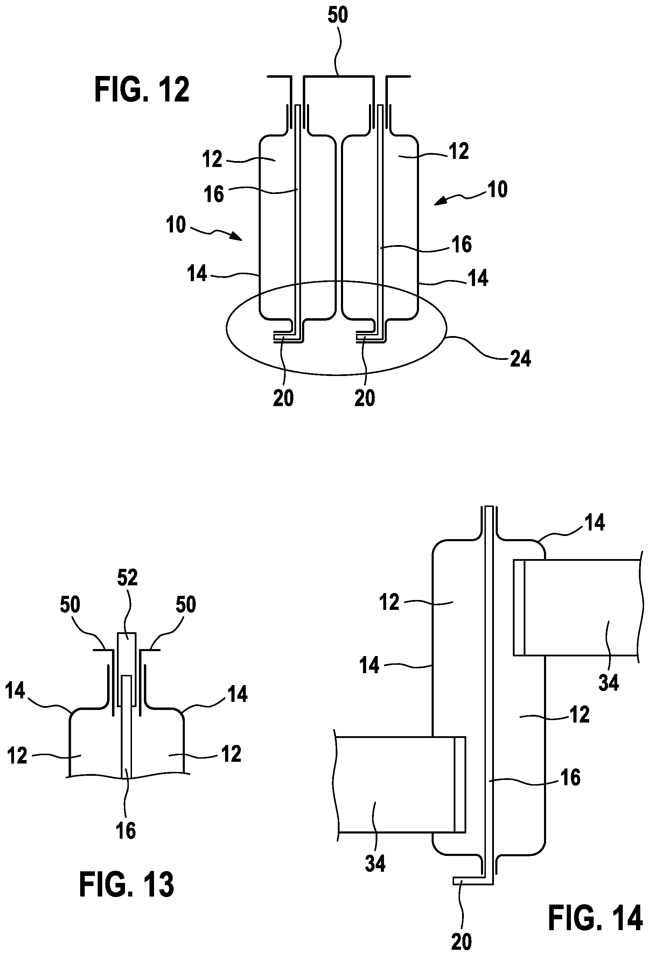

Such an embodiment may allow a significant improvement with regard to space required for placing a plurality of electrode assemblies 10, like shown in figure 12.

In detail like shown in figure 12, different layers 44, 48 of the cooling plate 16 are connected to an electrical connection 50, which may be used for forming a serial interconnection of the electrode assemblies 10. It can further be seen that the contact portion 20 is connected to a cooling base plate 24.

The connection to electrical connections 50 for example having different polarities can be formed even in low spatial dimensions in case an electrical insulator 52 is provided between the respective connections, of different polarity, like it is shown in figure 13.

It can further be provided that the electrodes 12 are not connected to the cooling plate 16 but both of them, so both polarities, may be connected to a respective connector 34 which is guided into the cover 14 in a sealed manner as described before in figure 7. This is shown in figure 14, for example.

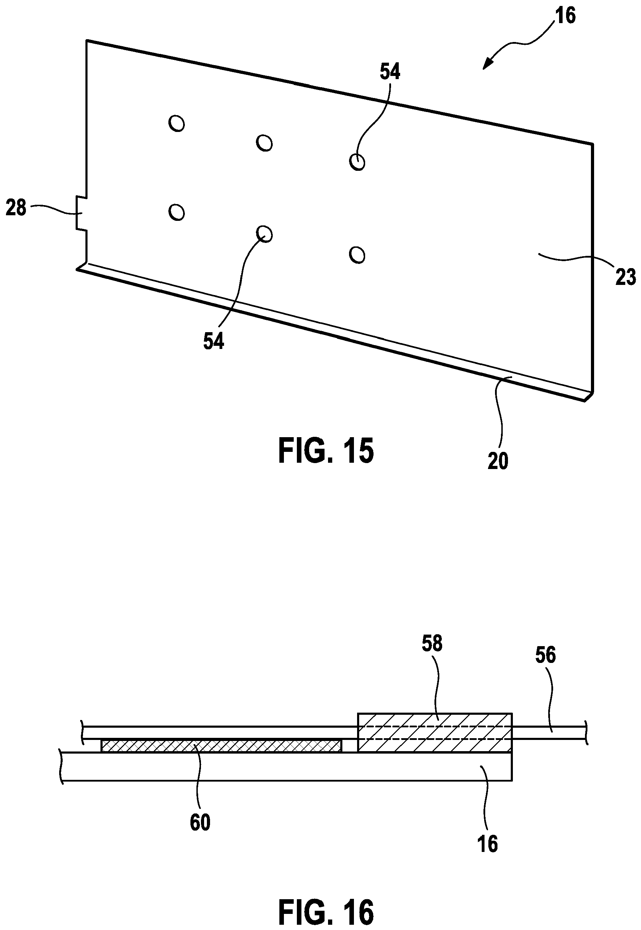

Figure 15 shows an embodiment of the cooling plate 16 for an electrode assembly 10 at which the cooling plate 16 comprises holes 54 for guiding an electrolyte through the cooling plate 16. This arrangement may be especially advantageous in case the electrodes 12 are interconnected in parallel.

Figure 16 shows a further embodiment of an electrode assembly 10. In detail, a current collector 56 of the electrode assembly 10 is shown, which forms a pole of the electrode assembly 10, or battery cell, respectively, and which is provided with an electrically insulative sealing layer 58 which will later be sealed with a housing. Further, the cooling plate 16 is shown which may form a further pole of the electrode assembly 10. Between the current collector 56 and the cooling plate 16, an electrical insulator 60, containing a nanofoil, is provided. The latter may be activated by means of temperatures which arise at high currents, such as short circuit currents, or it may be activated in a further manner such, that it melts. This allows forming a fast discharge device being a significant security measure.

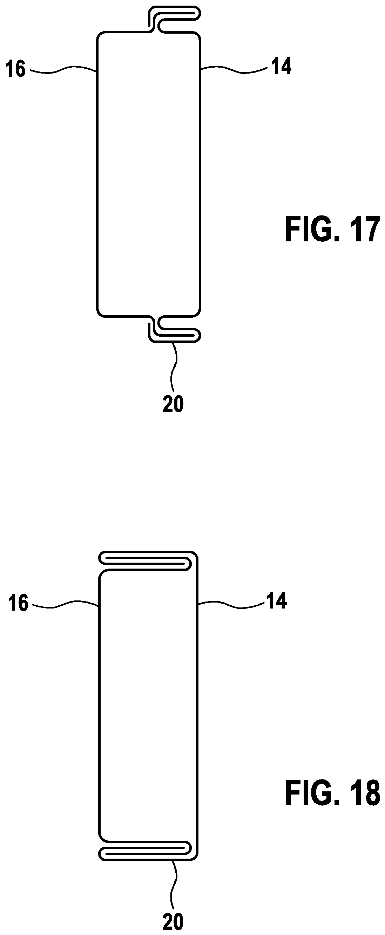

Figure 17 shows a further embodiment of an electrode assembly 10. According to figure 17, both of the cooling plate 16 and the cover 14 are shaped such as in a bulbously form which may be advantageous in order to accommodate the electrodes 12. This may be realized, for example, by means of metal deep drawing of the cover 14 as well as of the cooling plate 16.

Figure 18 shows an embodiment according to which only the cooling plate 16 is respectively shaped. According to this, the cover 14 does not has to be suitable for deep drawing.

Regarding figures 17 and 18, even as not shown for clarity reasons, the cover 14 surrounds the cooling plate 16 on both sides in a horizontal plane of the figure and accordingly both sides are provided with at least one electrode 12.

## Claims

1. Electrode assembly, comprising a plurality of electrodes (12), wherein the plurality of electrodes (12) is surrounded by an electrically insulating cover (14), wherein additionally to the plurality of electrodes (12), a cooling plate (16) is provided for cooling or heating the plurality of electrodes (12), wherein the cooling plate (16) at at least one end protrudes the electrodes (12) to form a connecting portion (20), wherein the connecting portion (20) proceeds in a direction deviating from the main direction of the electrodes (12) for fixing the electrode assembly (10) to a cooling base plate (24), **characterized in that** the cooling plate (16) is positioned between at least two electrodes (12) of the plurality of electrodes (12) and is further surrounded by said electrically insulating cover (14).

2. Electrode assembly according to claim 1, **characterized in that** the cover (14) is formed as an electrically insulating foil.

3. Electrode assembly according to claim 1 or 2, **characterized in that** the cooling plate (16), additionally to the cover (14), is provided with an electrically insulating layer (30).

4. Electrode assembly according to any of claims 1 to 3, **characterized in that** at least one electrode (12) is electrically connected to the cooling plate (16).

5. Electrode assembly according to claim 3 or 4, **characterized in that** the cooling plate (14) comprises an electrically insulating layer (30), wherein the layer (30) comprises a gap (32) for electrically contacting the cooling plate (16) with at least one electrode (12).

6. Electrode assembly according to any of claims 1 to 3, **characterized in that** the cooling plate (16) is electrically insulated against the electrodes (12), wherein external connectors (34) are guided into the cover (14) for electrically contacting the electrodes (12).

7. Electrode assembly according to any of claims 1 to 5, **characterized in that** the cooling plate (16) is formed as a multilayer assembly, wherein a first layer (44) is provided for electrically contacting an electrode (12) being polarized as an anode and wherein a second layer (48) is provided for electrically contacting an electrode (12) being polarized as a cathode.

8. Electrode assembly according to any of claims 1 to 5, **characterized in that** the cooling plate (16) is formed in a two-part form along at least one of its height and width, wherein a first layer part (38) is provided for electrically connecting an electrode (12) being polarized as an anode and a further part (40) is provided for electrically connecting an electrode (12) being polarized as a cathode.

9. Electrode assembly according to any of claims 1 to 8, **characterized in that** the cooling plate (16) comprises at least one hole (54) for guiding an electrolyte through the cooling plate (16).

10. Battery module comprising at least one electrode assembly (10) according to any of claims 1 to 5 or 7 to 9 and a cooling base plate (24), wherein the connecting portion (20) of at least one electrode assembly (10) is connected to the cooling base plate (24).
